# EUROPEAN PATENT APPLICATION

(11) **EP 2 587 383 A1**
(43) Date of publication of application: **01.05.2013**
(21) Application number: 11800620.4
(22) Date of filing: 16.06.2011
(51) Int. Cl.: G06F 13/00, H04W 88/08

(54) **HOME GATEWAY**

(30) Priority: 28.06.2010 JP 2010146690
(71) Applicant: Mitsubishi Electric Corporation, Tokyo 100-8310 (JP)
(72) Inventor: TOMOE Naohito, Tokyo 100-8310 (JP)
(74) Representative: Sajda, Wolf E.
(86) International application number: PCT/JP2011/063773
(87) International publication number: WO 2012/002154

(57) **Abstract**

It is an object to provide, in a home gateway including an in-home radio base station and the like, a technique not only having a relay function but also enabling information useful for a user to be obtained. A home gateway including an in-home radio base station (102) includes a wireless communication section (102a), a wired communication section (102b), and an application execution section (102c). To perform relaying, the in-home radio base station (102) uses first and second protocol stacks. To transmit and receive data to and from a wireless terminal (101), the in-home radio base station (102) uses a third protocol stack including the first protocol stack and an application layer. To transmit and receive data to and from a PDN (109), the in-home radio base station (102) uses a fourth protocol stack including the second protocol stack and an application layer.

## Description

### TECHNICAL FIELD

The present invention relates to a home gateway communicable with a PDN (Packet Data Network).

### BACKGROUND ART

Currently, realization of a ubiquitous network enabling anyone to obtain any necessary information anytime and anywhere is aimed at. As a technique for the achievement thereof, there has been proposed a home gateway including an in-home radio base station, and the like, and configured to transfer data bidirectionally between Internet (PDN) and a wireless terminal such as a mobile phone.
Due to such data transfer, in other words, relaying, performed by the home gateway, the wireless terminal is able to access the Internet even when the wireless terminal is within a home where reception of a communication radio wave is difficult. For example, Patent Document 1 discloses a home gateway.

### PRIOR-ART DOCUMENTS

### PATENT DOCUMENTS

Patent Document 1: Japanese Patent Application Laid-Open JP-A-2010-016 602

### SUMMARY OF THE INVENTION

### PROBLEMS TO BE SOLVED BY THE INVENTION

A home gateway having a relay function has value as a communication apparatus as described above, but it is merely used in the same manner as a macrocell base station which has the similar relay function, and provided with no further function.

Moreover, although realization of the ubiquitous network is aimed at, whether or not a user can obtain desired information from the Internet actually depends not only on a function of the wireless terminal but also on the degree to which the user is familiar with the wireless terminal, the Internet, and the like. Here, not only young people, who are familiar with wireless terminals, but also housewives and old people, who are not familiar with wireless terminals so much, may be users. Accordingly, there is a problem that some users may not be able to obtain their desired information and a gap in network usage is existing.

The present invention is made in view of the problems described above, and an object of the present invention is to provide a technique enabling any user to easily obtain desired information in a home gateway including an in-home radio base station and the like.

### MEANS FOR SOLVING THE PROBLEMS

A home gateway according to the present invention includes a first communication section for communicating with a wireless terminal, and a second communication section for communicating with a PDN (Packet Data Network) via a predetermined node.
In a case where the home gateway performs relaying to transfer data bidirectionally between the wireless terminal and the PDN, the first communication section communicates with the wireless terminal by using a first protocol stack while the second communication section communicates with the predetermined node by using a second protocol stack.
In a case where the home gateway transmits and receives data to and from the wireless terminal, the first communication section communicates with the wireless terminal by using a third protocol stack that includes the first protocol stack and an upper layer above a layer of the first protocol stack.
In a case where the home gateway transmits and receives data to and from the PDN via the predetermined node, the second communication section communicates with the predetermined node by using a fourth protocol stack that includes the second protocol stack and an upper layer above a layer of the second protocol stack. The home gateway further includes an application execution section for implementing a predetermined application function by using a program in the upper layer.

### EFFECTS OF THE INVENTION

In the present invention, the home gateway performs relaying by using the first and second protocol stacks, and also performs communication with the wireless terminal and the PDN by using the third and fourth protocol stacks including the first and second protocol stacks, respectively, and the upper layers thereof.
Accordingly, the home gateway can not only perform relaying but also transmit and receive data at the upper layer to and from each of the wireless terminal and the PDN, thus automatically obtaining information desired by the user from the data. This allows any user to easily obtain his/her desired information.

### BRIEF DESCRIPTION OF THE DRAWINGS

- FIG. 1: is a diagram showing a configuration of a communication system according to a preferred Embodiment 1.
- FIG. 2: is a diagram showing a configuration of protocol stacks of the communication system according to the preferred Embodiment 1.
- FIG. 3: is a diagram showing relaying in the communication system according to the preferred Embodiment 1.
- FIG. 4: is a diagram showing transmission and reception of data in the communication system according to the preferred Embodiment 1.
- FIG. 5: is a diagram showing transmission and reception of data in the communication system according to the preferred Embodiment 1.
- FIG. 6: is a flowchart showing an operation of the communication system according to the preferred Embodiment 1.
- FIG. 7: is a flowchart showing an operation of the communication system according to the preferred Embodiment 1.
- FIG. 8: is a flowchart showing an operation of the communication system according to the preferred Embodiment 1.
- FIG. 9: is a flowchart showing an operation of the communication system according to the preferred Embodiment 1.
- FIG. 10: is a diagram showing a configuration of a communication system according to a preferred Embodiment 2.
- FIG. 11: is a diagram showing a configuration of protocol stacks of the communication system according to the preferred Embodiment 2.
- FIG. 12: is a diagram showing relaying in the communication system according to the preferred Embodiment 2.
- FIG. 13: is a diagram showing transmission and reception of data in the communication system according to the preferred Embodiment 2.
- FIG. 14: is a diagram showing transmission and reception of data in the communication system according to the preferred Embodiment 2.
- FIG. 15: is a diagram showing a configuration of a communication system including a comparative in-home radio base station.

### PREFERRED EMBODIMENT FOR CARRYING OUT THE INVENTION

### Preferred Embodiment 1

In this preferred Embodiment 1, a description will be given on the assumption that a home gateway includes an in-home radio base station. Firstly, prior to a description of an in-home radio base station according to this preferred embodiment, an in-home radio base station (hereinafter referred to as "comparative in-home radio base station") to be compared with an in-home radio base station 102 according to this preferred embodiment will be described.

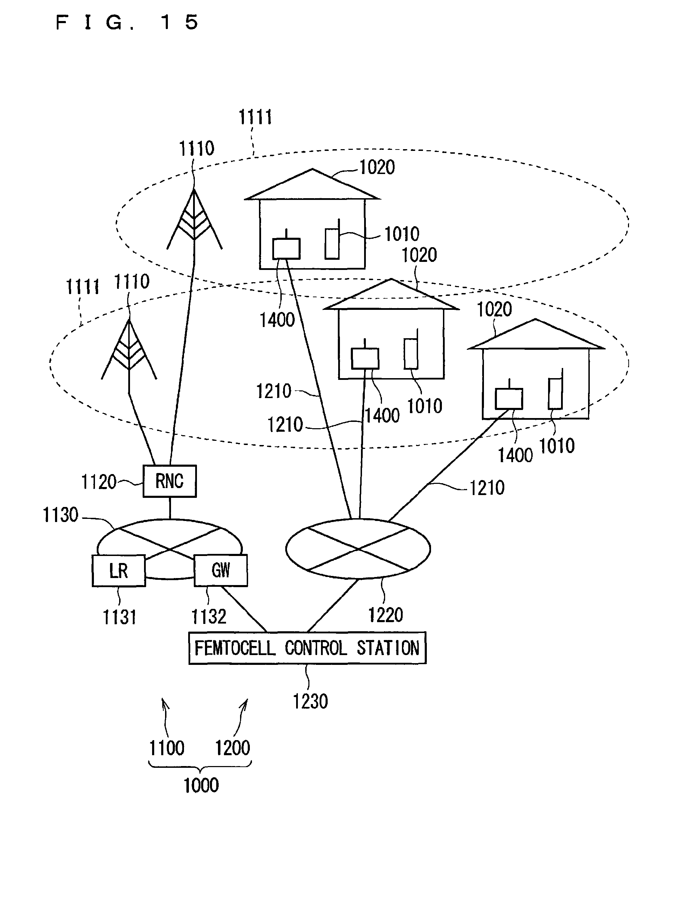

FIG. 15 is a diagram showing a configuration of a communication system 1000 including a femtocell base station 1400 that is the comparative in-home radio base station. The communication system 1000 includes a mobile phone 1010, a public mobile phone communication network 1100, and a femtocell communication network 1200. The public mobile phone communication network 1100 is for wireless communication with the mobile phone 1010 in a wide communication range 1111. The femtocell communication network 1200 is for wireless communication with the mobile phone 1010, and the like, in a narrow communication range.

The public mobile phone communication network 1100 is a communication network established for the mobile phone 1010, and includes a macrocell base station 1110, an RNC (Radio Network Controller) 1120, and a core network 1130 for mobile phone communication. The macrocell base station 1110 is a base station having a cell radius of about several km to 10 km, and performs multiple access that allows simultaneous connection with several tens of mobile phones 1010.
The RNC 1120 is connected to the macrocell base station 1110, and performs a radio link control, call processing, and the like, such as registration of the position of the mobile phone 1010 communicating with this macrocell base station 1110, incoming and outgoing calls, and handover. The core network 1130 is connected to the RNC 1120, and includes an LR (Location Resister) 1131 and a GW (Gateway) 1132, to form a backbone dedicated line for mobile phone communication.

While the public mobile phone communication network 1100 is a communication network established for the mobile phone 1010 as described above, the femtocell communication network 1200 is a communication network established with the mobile phone 1010, a home network apparatus terminal (not shown), and the like. Here, the home network apparatus terminal means an apparatus terminal connectable with a network and having a function for downloading contents and performing a remote control, such as status collection, on a network appliance that is communicating with the apparatus terminal itself.

The femtocell communication network 1200 includes the femtocell base station 1400 that is the comparative in-home radio base station, a broadband line 1210, Internet 1220, and a femtocell control station 1230. The femtocell base station 1400 is a small-size base station having a cell radius of about several tens of m placed in a home (building) 1020. The femtocell base station 1400 is connected to the Internet 1220 via the broadband line 1210 that is laid in the home 1020.

The femtocell control station 1230 collectively controls a plurality of femtocell base stations 1400 via the Internet 1220 or the like, and is capable of a connection control on the mobile phone 1010 or the like via the femtocell base station 1400. The femtocell control station 1230 is connected to the core network 1130 via the GW 1132.

In the above-described communication system 1000, the femtocell base station 1400 that is the comparative in-home radio base station has a relay function for transferring data bidirectionally between the Internet 1220 and the mobile phone 1010 or the like. Therefore, even in a case where the mobile phone 1010 or the like existing in the home 1020 cannot perform wireless communication with the macrocell base station 1110, this mobile phone 1010 or the like is communicable with another communication apparatus (not shown) via the femtocell base station 1400 and the Internet 1220 or the like.
However, the femtocell base station 1400 that is the comparative in-home radio base station is merely used in the same manner as the macrocell base station 1110 which has the similar relay function, and provided with no further function.

On the other hand, the in-home radio base station according to this preferred embodiment has not only the relay function but also an agent function, and therefore can obtain information that is likely to be desired by a user. Hereinafter, the in-home radio base station according to this preferred embodiment will be described.

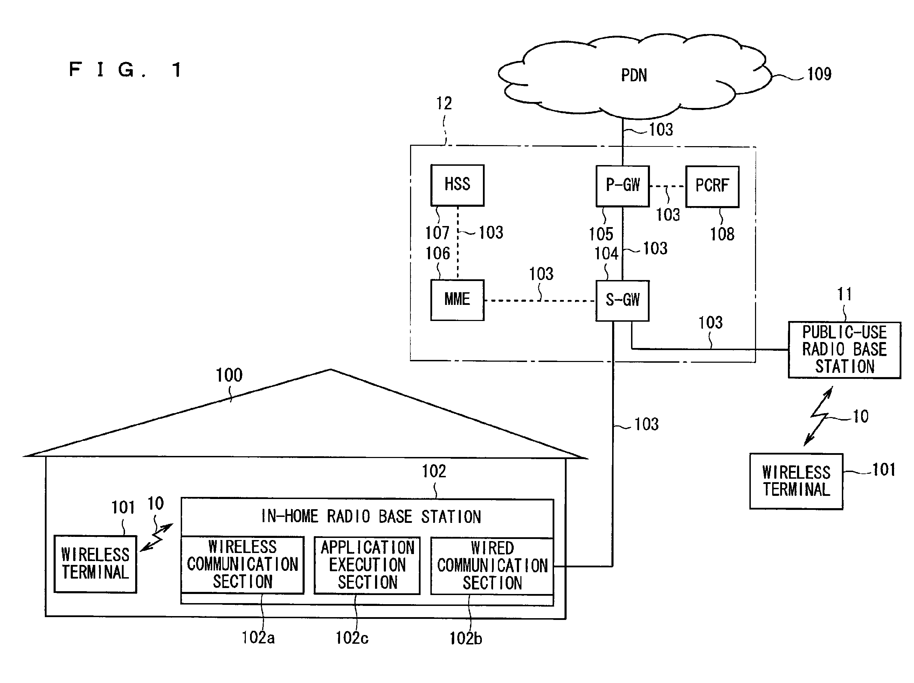

FIG. 1 is a diagram showing a communication system including the in-home radio base station 102 according to this preferred embodiment. This communication system includes a public-use radio base station 11 that functions as the macrocell base station 1110 described above, a business-use wired network 12, a wireless terminal 101 for a mobile phone, a home network apparatus terminal, and the like, the in-home radio base station 102 placed in a home (building) 100 and performing wireless communication 10 with the wireless terminal 101, and a PDN (Packet Data Network) 109 corresponding to the Internet.

In the following, a description will be given on the assumption that LTE (Long Term Evolution) wireless communication standardized by 3GPP (Third Generation Partnership Project) is performed between the wireless terminal 101 and the in-home radio base station 102.

The business-use wired network 12 is connected to the public-use radio base station 11, the in-home radio base station 102, and the PDN 109 via a broadband line 103, and communicate with them. The business-use wired network 12 includes the broadband line 103, an S-GW (Serving Gateway) 104, a P-GW (Packet Data Network Gateway) 105, a MME (Mobility Management Entity) 106, a HHS (Home Subscriber Server) 107, and a PCRF (Policy and Charging Rule Function) 108.

The in-home radio base station 102 is connected to the S-GW 104 via the broadband line 103, and the S-GW 104 is connected to the P-GW 105 via the broadband line 103. The P-GW 105 is a connection point with the PDN 109 that is an external IP service network, and connected to the PDN 109 via the broadband line 103.

The S-GW 104 and the P-GW 105 mutually convert data of the in-home radio base station 102 and data of the PDN 109 having different protocols into each other. Accordingly, the in-home radio base station 102 and an IP host (not shown in FIG. 1) on the PDN 109 are communicable with each other via the S-GW 104 and the P-GW 105 (predetermined node).

The in-home radio base station 102 according to this preferred embodiment has a relay function for transferring data bidirectionally between the wireless terminal 101 and the PDN 109 (IP host). Therefore, the PDN 109 (IP host) and the wireless terminal 101 performing wireless communication with the in-home radio base station 102 are communicable with each other via the in-home radio base station 102, the S-GW 104, and the P-GW 105. This enables the user to browse a web page on the PDN 109 by using the wireless terminal 101 existing in the home 100.

The S-GW 104 is also connected to the public-use radio base station 11 via the broadband line 103. The public-use radio base station 11 is a base station having a cell radius of about several km to 10 km, and performs multiple access that allows simultaneous connection with a several tens of wireless terminals 101. In this manner, the in-home radio base station 102 and the public-use radio base station 11 are connected via the S-GW 104, and therefore the in-home radio base station 102 and the public-use radio base station 11 are communicable with each other via the S-GW 104.
Accordingly, the wireless terminal 101 performing the wireless communication 10 with the in-home radio base station 102 and the wireless terminal 101 performing the wireless communication 10 with the public-use radio base station 11 are communicable with each other via the in-home radio base station 102, the S-GW 104, and the public-use radio base station 11.

The in-home radio base station 102 includes a wireless communication section 102a for performing wireless communication with the wireless terminal 101, a wired communication section 102b for performing wired communication with the S-GW 104, and an application execution section 102c for implementing an application function.

A main part of the communication system according to this preferred embodiment has been described above. Next, a description will be given mainly about the LTE wireless communication.

In the LTE wireless communication, OFDM (Orthogonal Frequency Division Multiplexing) is adopted in downlink, SC-FDMA (Single-Carrier Frequency Division Multiple Access) is adopted in uplink, and eNodeB (evolved NodeB) is adopted in the in-home radio base station 102.

In the LTE wireless communication, the wireless terminal 101 transmits and receives, to and from the in-home radio base station 102, U-Plane data that is user data such as HTML (HyperText Markup Language) file data and streaming data, and C-Plane data that is control data used for call connection and the like.

The S-GW 104 has a routing function for an U-Plane data packet, and transmits and receives the U-Plane data packet to and from the in-home radio base station 102.

The MME 106 is connected to the S-GW 104 via the broadband line 103. The MME 106 plays a role of processing a NAS (Non-Access Stratum) signal that is included in the C-Plane data packet and used for performing mobility management and session management. The MME 106 transmits and receives the C-Plane data packet to and from the in-home radio base station 102.

The HSS 107 is connected to the MME 106 via the broadband line 103. The HSS 107 is a subscriber information database, and performs authentication, roaming, and a service control.

The PCRF 108 is connected to the P-GW 105 via the broadband line 103. The PCRF 108 has a function for performing a QoS (Quality of Service) control and a charging control in accordance with the traffic.

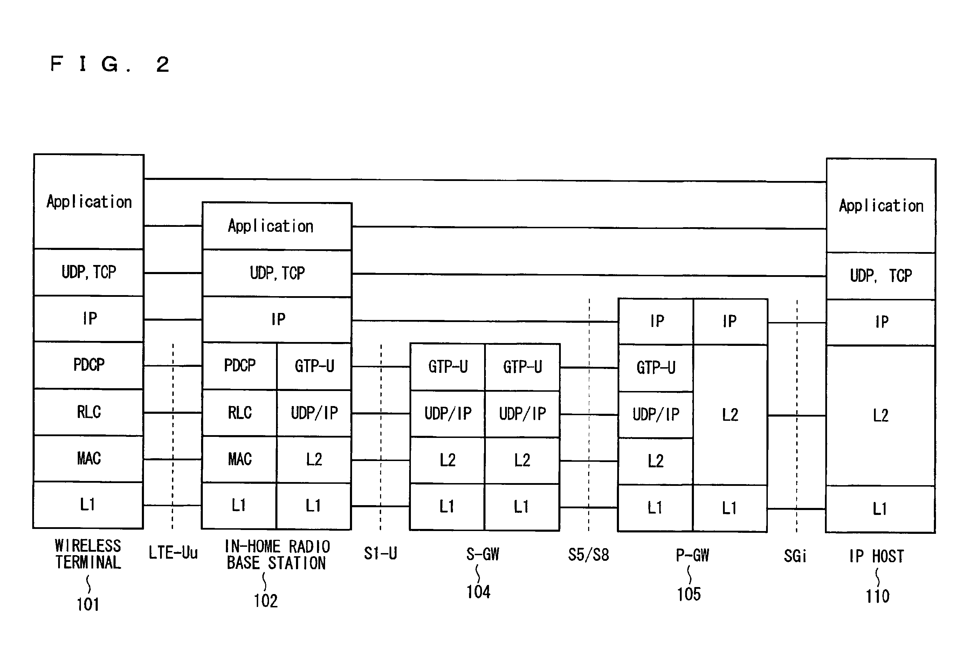

FIG. 2 is a diagram showing a protocol stack for use in the communication system according to this preferred embodiment.

As shown in FIG. 2, a protocol stack of the wireless terminal 101 includes an L1 (Layer1), a MAC (Media Access Control) layer, an RLC (Radio Link Control) layer, a PDCP (Packet Data Convergence Protocol) layer, an IP (Internet Protocol) layer, either one of an UDP (User Dataprogram Protocol) layer and a TCP (Transmission Control Protocol) layer (hereinafter referred to as "UDP or TCP layer"), and an application (Application) layer.

The L1 is a wireless physical layer using a radio access scheme of the OFDM for downlink and the SC-FDMA for uplink. The MAC layer is a layer for playing a role of scheduling, multiplexing, demultiplexing, and HARQ (Hybrid Automatic Repeat Request) that is an error control in which error correction coding and automatic repeat request are combined.
The RLC layer is a layer for playing a role of ARQ (Automatic Repeat Request) that is a flow control and a retransmission control. The PDCP layer is a layer for playing a role of an encryption function and ROHC (Robust Header Compression) that is a header compression function. In the wireless terminal 101, the IP layer, the UDP or TCP layer, and the application layer are layers for accessing the PDN 109.

In the wireless side (wireless terminal 101 side) in the in-home radio base station 102, a protocol stack includes an L1, a MAC layer, an RLC layer, and a PDCP layer. Hereinafter, the L1, the MAC layer, the RLC layer, and the PDCP layer, which serve for wireless transmission in the in-home radio base station 102, will be sometimes referred to as "first protocol stack".

In the wired side (S-GW 104 side) in the in-home radio base station 102, a protocol stack includes an L1, an L2 (Layer2), an UDP/IP layer, and a GTP-U (GPRS Tunneling Protocol for User Plane) layer. Hereinafter, the L1, the L2, the UDP/IP layer, and the GTP-U layer, which serve for IP transmission in the in-home radio base station 102, will be sometimes referred to as "second protocol stack".

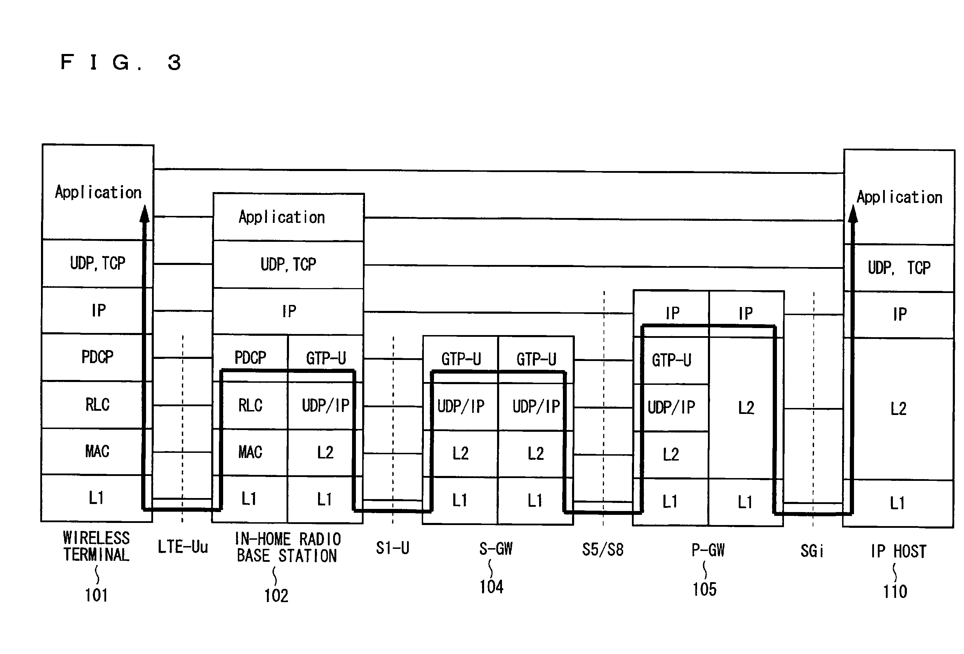

In a case where the in-home radio base station 102 performs relaying to transfer data bidirectionally between the wireless terminal 101 and the PDN 109 (IP host 110), the in-home radio base station 102 uses the first and second protocol stacks. A detailed description of this operation will be given later with reference to FIG. 3.

On each of the first and second protocol stacks, an IP layer, a UDP or TCP layer, and an application layer (upper layers) are provided. Hereinafter, a protocol stack including the first protocol stack, the IP layer, the UDP or TCP layer, and the application layer will be sometimes referred to as "third protocol stack". Also, a protocol stack including the second protocol stack, the IP layer, the UDP or TCP layer, and the application layer will be sometimes referred to as "fourth protocol stack".

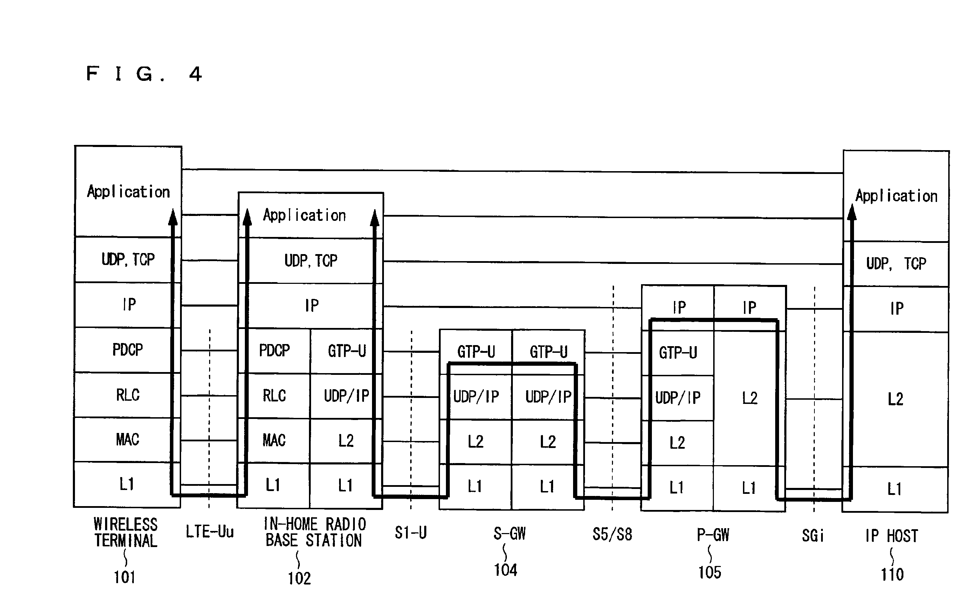

In a case where the in-home radio base station 102 transmits and receives, to and from the wireless terminal 101, data used in the in-home radio base station 102 and the wireless terminal 101, the in-home radio base station 102 uses the third protocol stack. In a case where the in-home radio base station 102 transmits and receives, to and from the PDN 109 (IP host 110), data used in the in-home radio base station 102 and the PDN 109 (IP host 110), the in-home radio base station 102 uses the fourth protocol stack. A detailed description of this operation will be given later with reference to FIG. 4.

In both the in-home radio base station 102 side and the P-GW 105 side in the S-GW 104, a protocol stack includes an L1, an L2, an UDP/IP layer, and a GTP-U layer, which serve for IP transmission.

In the S-GW 104 side in the P-GW 105, similarly to the S-GW 104, a protocol stack includes an L1, an L2, an UDP/IP layer, a GTP-U layer, and an IP layer, which serve for IP transmission. In the PDN 109 (IP host 110) side in the P-GW 105, a protocol stack includes an L1, an L2, and an IP layer, which serve for IP transmission with the PDN 109 that is external Internet.

A protocol stack of the IP host 110 on the PDN 109 includes an L1, an L2, an IP layer, an UDP or TCP layer, and an application layer, which serve for IP transmission.

FIG. 3 is a diagram showing a data transfer path in the communication system in a case where the in-home radio base station 102 performs relaying to transfer data bidirectionally between the wireless terminal 101 and the PDN 109 (IP host 110). The arrow passing through each protocol stack indicates a data path (hereinafter, the same is true for similar drawings).
Referring to this drawing, firstly, a description will be given to an operation of the communication system when transmission data (for example, HTML file data) at an application level of the wireless terminal 101 is transferred from the wireless terminal 101 to the IP host 110.

The wireless terminal 101 performs wireless communication with the wireless communication section 102a of the in-home radio base station 102 via an interface called LTE-Uu that is specified by 3GPP, and transmits the transmission data at an application level to the wireless communication section 102a. In this communication, the wireless communication section 102a uses the first protocol stack including the L1 to PDCP layers.

The wired communication section 102b of the in-home radio base station 102 performs wired communication with the S-GW 104 via an interface called S1-U that is specified by 3GPP, and transmits the transmission data to the S-GW 104. In this communication, the wired communication section 102b uses the second protocol stack including the L1 to GTP-U layers.

In this manner, the wireless communication section 102a and the wired communication section 102b use the first and second protocol stacks, respectively, and consequently the transmission data of the wireless terminal 101 passes through the PDCP layer and the GTP-U layer of the in-home radio base station 102.

The transmission data transmitted from the in-home radio base station 102 to the S-GW 104 passes through the GTP-U layer of the S-GW 104, and then is transmitted from the S-GW 104 to the P-GW 105 via an interface called S5/S8 that is specified by 3GPP. The transmission data transmitted from the S-GW 104 to the P-GW 105 passes through the IP layer of the P-GW 105, and then is transmitted from the P-GW 105 to the IP host 110 via an interface called SGi that is specified by 3GPP. The IP host 110 uses the transmission data transmitted from the P-GW 105, that is, the data at the application level of the wireless terminal 101, as data at an application level of the IP host 110.

In the above-described manner, the data at the application level of the wireless terminal 101 is transferred from the wireless terminal 101 to the IP host 110. On the other hand, in a case where data at the application level of the IP host 110 is transferred from the IP host 110 to the wireless terminal 101, an operation reverse to the above-described operation is performed. In this manner, the in-home radio base station 102 performs relaying to transfer data bidirectionally between the wireless terminal 101 and the PDN 109 (IP host 110) by using the first and second protocol stacks.

The in-home radio base station 102 according to this preferred embodiment is also able to transmit and receive the data at the application level to and from the wireless terminal 101 and transmit and receive the data at the application level to and from the PDN 109 (IP host 110), by using the third and fourth protocol stacks in which the application layer and the like are provided on the first and second protocol stacks, respectively. Next, this will be described.

FIG. 4 is a diagram showing a data transfer path in a case where data is transmitted and received between the in-home radio base station 102 and the wireless terminal 101 and between the in-home radio base station 102 and the PDN 109 (IP host 110). In an operation shown in FIG. 4, only the in-home radio base station 102 operates differently from in the operation shown in FIG. 3. Therefore, only this point will be described.

The wireless communication section 102a of the in-home radio base station 102 performs wireless communication with the wireless terminal 101 via the LTE-Uu by using the third protocol stack. Thereby, the in-home radio base station 102 can use the data at the application level supplied from the wireless terminal 101 as the data at the application level of the in-home radio base station 102. Likewise, the wireless terminal 101 can use the data at the application level supplied from the in-home radio base station 102 as the data at the application level of the wireless terminal 101.

On the other hand, the wired communication section 102b of the in-home radio base station 102 performs wired communication with the S-GW 104 via the S1-U by using the fourth protocol stack. Thereby, the in-home radio base station 102 can use the data at the application level supplied from the PDN 109 (IP host 110) and transmitted from the S-GW 104 as the data at the application level of the in-home radio base station 102.
Likewise, the PDN 109 (IP host 110) can use the data at the application level supplied from the in-home radio base station 102 and transmitted from the P-GW 105 as the data at the application level of the PDN 109 (IP host 110).

Next, a description will be given to a case where the public-use radio base station 11 performs relaying to transfer data bidirectionally between the wireless terminal 101 and the PDN 109 (IP host 110).

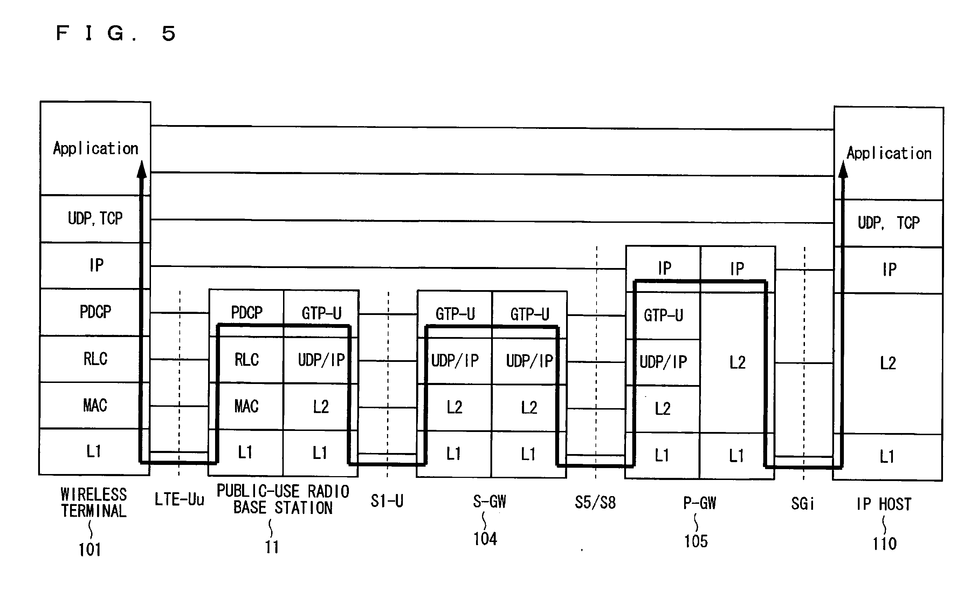

FIG. 5 is a diagram showing a data transfer path in the communication system in a case where the public-use radio base station 11 performs relaying to transfer data bidirectionally between the wireless terminal 101 and the PDN 109 (IP host 110). As shown in this drawing, the public-use radio base station 11 performs the same operation as the relaying performed by the in-home radio base station 102 shown in FIG. 3.

Here, the description is returned to the in-home radio base station 102. As shown in FIG. 4, the in-home radio base station 102 according to this preferred embodiment can transmit and receive the data at the application level to and from each of the wireless terminal 101 and the PDN 109 (IP host 110). Here, the application execution section 102c of the in-home radio base station 102 implements the application function by using a program in the application layer, and thereby can automatically obtain information useful for the user from the data at the application level supplied from the wireless terminal 101 and the PDN 109 (IP host 110).

The application execution section 102c according to this preferred embodiment automatically creates a home page specific to the user which posts information useful for the user, based on the data at the application level supplied from the wireless terminal 101 and the PDN 109 (IP host 110).
To be more specific, the application execution section 102c of the in-home radio base station 102 creates a home page based on contents of web pages the user previously browsed, creates a home page based on information input by the user, or creates a home page that posts monitoring results collected by the wireless terminal 101 within the home 100. In the following, an operation of creating these home pages by the application execution section 102c will be described.

### Creation of Home Page based on Previous Browsing

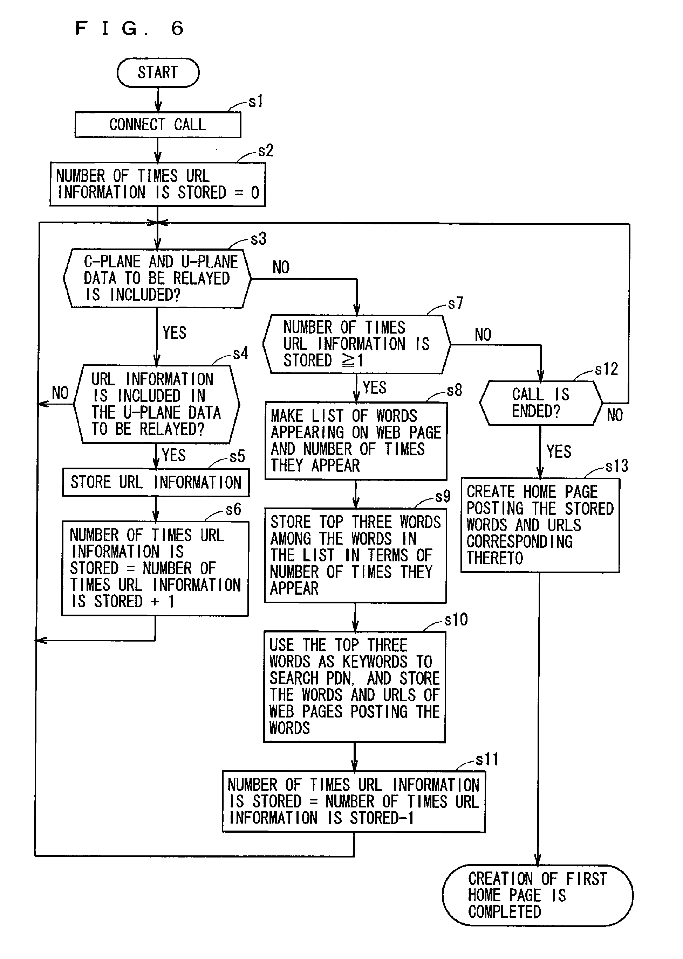

FIG. 6 is a flowchart showing an operation of the in-home radio base station 102 when the application execution section 102c creates a home page (hereinafter, sometimes referred to as "first home page") based on contents of web pages previously browsed by the user. In the following, an operation of the in-home radio base station 102 at this time will be described.

Firstly, in step s1, the in-home radio base station 102 connects the wireless terminal 101 with regard to a packet call. In step s2, the in-home radio base station 102 initializes the number of times URL information is stored which indicates the number of times the URL information is stored in step s5 which will be described later (the number of times the URL information is stored = 0). In step s3, the in-home radio base station 102 determines whether or not the C-Plane data and the U-Plane data are included in relay object data.
If it is determined that the C-Plane data and the U-Plane data are included, the process proceeds to step s4. On the other hand, if it is determined that the C-Plane data and the U-Plane data are not included, in other words, if the in-home radio base station 102 is not performing relaying, the process proceeds to step s7.

In step s4, the in-home radio base station 102 determines whether or not the URL information is included in the U-Plane data whose inclusion has been determined in step s3. If the in-home radio base station 102 determines that the URL information is included, the process proceeds to step s5, and otherwise the process returns to step s3.

In step s5, the in-home radio base station 102 stores the URL information. Then, in step s6, the in-home radio base station 102 adds 1 to the number of times the URL information is stored (the number of times the URL information is stored = the number of times the URL information is stored + 1). After step s6, the process returns to step s3.

Next, a description will be given to operations of step s7 and subsequent steps, which are performed if it is determined in step s3 that U-Plane data and the like are not included. In step s7, the in-home radio base station 102 determines whether or not the number of times the URL information is stored ≥ 1 is satisfied. If it is determine that the number of times the URL information is stored ≥ 1 is satisfied, the process proceeds to step s8, and otherwise the process proceeds to step s12.

In step s8, the application execution section 102c interprets HTML of a web page with respect to each URL stored in step s5, and makes a list of words appearing on the web page (that is, character strings posted on the web page) and the number of times each of the words appears. In step s9, the application execution section 102c stores, among a plurality of words in the list, the top three words in terms of the number of times they appear. Then, in step s10, the application execution section 102c uses these three words as keywords to search the PDN 109 for the URLs of web pages that posts these words, and then stores the words and the URLs obtained by the searching.

This searching is achieved by transmission and reception of the data at the application level between the application execution section 102c and the PDN 109.

In step s11, the in-home radio base station 102 subtracts 1 from the number of times the URL information is stored (the number of times the URL information is stored = the number of times the URL information is stored - 1). As a result, the operations of steps s7 to s11 are repeated a number of times equal to the number of times the URL information is stored in step s5. After step s11, the process returns to step s3.

Next, a description will be given to operations of step s12 and subsequent steps, which are performed if it is determined in step s7 that the number of times the URL information is stored ≥ 1 is not satisfied, that is, if it is determined that the number of times the URL information is stored is 0. In step s12, the in-home radio base station 102 determines whether or not the packet call is call-ended.
If it is determined that a call is ended in step s12, the process proceeds to step 13, because the number of times the URL information is stored does not increase until step s1 is performed again. If it is determined that a call is not ended in step s12, the process returns to step s3, because there is a possibility that the user using the wireless terminal 101 may make a web access thereafter so that the number of times the URL information is stored increases.

In step s13, the application execution section 102c creates a home page that posts the URL (that is, the URL of a web page related to the web page browsed by the user) stored in step s10. More specifically, the application execution section 102c sets the words stored in step s10 to be an index, and creates a home page on which the index and the URL corresponding thereto are posted in association. In a case where the home page has been already created, it may be acceptable to perform only updating of the words and the URL. After step s13, a sequence of processes shown in FIG. 6 is completed.

As described above, the in-home radio base station 102 according to this preferred embodiment automatically creates the home page posting the URL of a web page that is likely to be desired by the user is posted. Accordingly, even if the user is unfamiliar with a mobile phone and the Internet (PDN 109), the user can easily obtain his/her desired information at his/her desired timing. Since the in-home radio base station 102 creates the home page while relaying of the C-Plane data and the U-Plane data is not performed (when the process proceeds to step s7), no delay occurs in the relay traffic.

### Creation of Home Page based on Input Information

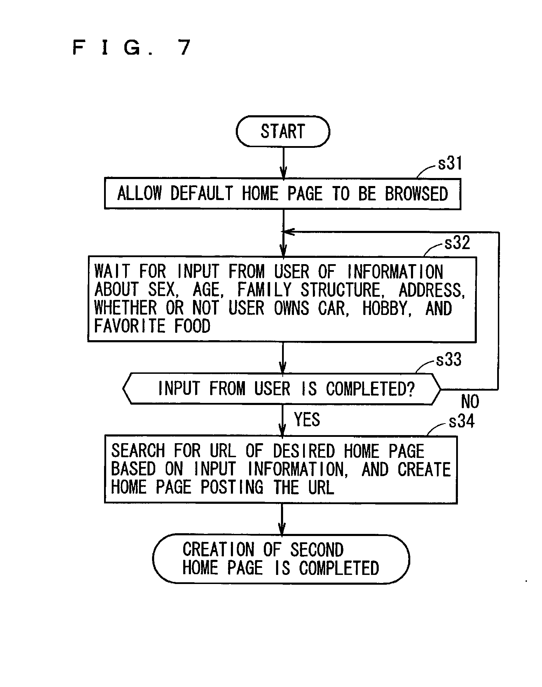

FIG. 7 is a flowchart showing an operation of the in-home radio base station 102 in a case where the application execution section 102c creates a home page (hereinafter sometimes referred to as "second home page") based on information input by the user. In the following, an operation of the in-home radio base station 102 at this time will be described.

The in-home radio base station 102, when powered on and starting to operate, in step s31, allows a default home page to be browsed. Then, in step s32, the in-home radio base station 102 is brought into an input waiting state for receiving, on the default home page, an input from the user of information about the sex, the age, a family structure, an address, whether or not the user owns a car, a hobby, and a favorite food. This input waiting state is displayed on the default home page, and such a display state is held until the user makes an input.

In step s33, the in-home radio base station 102 determines whether or not the input of the above-mentioned information from the user is completed. If it is determined that the input is completed, the process proceeds to step s34, and otherwise the process returns to step s32.

In step s34, the application execution section 102c searches (extracts), on the PDN 109, for the URL of the desired web page based on the input information given from the outside (user).

This searching is achieved by transmission and reception of the data at the application level between the application execution section 102c and the PDN 109.

In this preferred embodiment, in step s34, the application execution section 102c searches, on the PDN 109, for the URLs of web pages concerning medical information, government services information, disaster countermeasures information, transport/tourism information, leisure information, education/learning information, and food information, based on the input information given from the user.
Then, if needed, the application execution section 102c interprets HTML of the web pages obtained by the searching, and extracts the URL posting information that most closely matches with the input information. In the following, a specific description will be given to an URL search (extraction) algorithm.

As for the medical information, based on the input information about the address, the application execution section 102c searches the PDN 109 for a web page of a district to which this address belongs, and searches this web page for emergency medical information, and searches for the URL of a web page that posts this information. As for the medical information, based on the input information about a residence, the application execution section 102c searches the PDN 109 for the URL of a web page that posts information about the nearest medical facility.

As for the government services information, based on the input information about the address, the application execution section 102c searches the PDN 109 for a home page of a district office that manages this address, and searches this home page for government services information, and searches for the URL of a web page that posts this information.

As for the disaster countermeasures information, based on the input information about the address, the application execution section 102c searches the PDN 109 for a home page of a district to which this address belongs, and searches this home page for the latest disaster prevention information, and searches for the URL of a web page that posts this information.
As for the disaster countermeasures information, based on the input information about the address, the application execution section 102c searches the home page for information concerning an evacuation area in case of a disaster, and searches for the URL of a web page that posts this information.

As for the transport/tourism information, based on the input information about the sex, the age, the family structure, the address, whether or not the user owns a car, the hobby, and the favorite food, and event information concerning seasonal festivals and the like that is posted on a desired web page, the application execution section 102c searches the PDN 109 for the URL of a web page that posts transport/tourism information.

As for the leisure information, based on the input information about the sex, the age, the family structure, the address, whether or not the user owns a car, the hobby, and the favorite food, and event information concerning concerts and the like that is posted on a desired web page, the application execution section 102c searches the PDN 109 for the URL of a web page that posts leisure information.

As for the education/learning information, based on the input information about the family structure and the address, the application execution section 102c searches the PDN 109 for the URL of a web page that posts information about the nearest school or cram school.

As for the food information, based on the input information about the address and the favorite food and bargain information posted on a desired home page, the application execution section 102c searches the PDN 109 for the URL of a web page that posts food information.

In step s34 described above, the application execution section 102c stores the URL obtained by the searching (extraction). Then, the application execution section 102c sets the medical information, the government services information, the disaster countermeasures information, the transport/tourism information, the leisure information, the education/learning information, or the food information to be an index, and creates a home page on which the index and the URL corresponding thereto are posted in association. In a case where the home page has been already created, it may be acceptable to perform only updating of the URL. Then, a sequence of processes shown in FIG. 7 is completed.

As described above, the in-home radio base station 102 according to this preferred embodiment automatically creates the home page that posts the URL of a web page suitable for the input information given from the user. Accordingly, even if the user is unfamiliar with a mobile phone and the Internet (PDN 109), the user can easily obtain his/her desired information at his/her desired timing.
Particularly, this web page is useful because it posts fundamental information a person frequently uses in his/her life, such as the medical information, the government services information, the disaster countermeasures information, the transport·/tourism information, the leisure information, the education/learning information, or the food information.

### Creation of Home Page based on Monitoring Result of Wireless Terminal 101

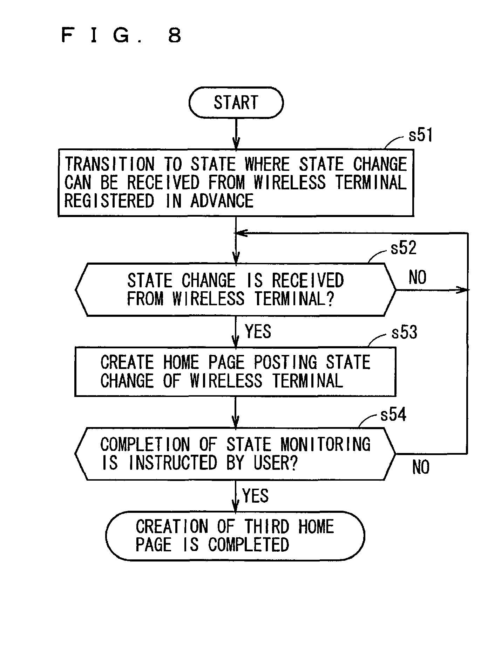

FIG. 8 is a flowchart showing an operation of the in-home radio base station 102 in a case where the application execution section 102c creates a home page (hereinafter sometimes referred to as "third home page") that posts a monitoring result of the wireless terminal 101. In the following, an operation of the in-home radio base station 102 at this time will be described. It is assumed that, in the default home page mentioned above, the wireless terminal 101 to be monitored, such as a home network apparatus terminal and a mobile phone, has been registered in advance to the user.

The in-home radio base station 102, when powered on and starting to operate, in step s51, transitions to a state in which the in-home radio base station 102 can at any time receive a state change of the wireless terminal 101 registered in advance, which is transmitted from this wireless terminal 101. In a case where there is a state change, the wireless terminal 101 transmits a notification thereof to the in-home radio base station 102. In this manner, the application execution section 102c can monitor the state of the registered wireless terminal 101.

This monitoring is achieved by transmission and reception of the data at the application level between the application execution section 102c and the wireless terminal 101.

In step s52, the application execution section 102c determines whether or not a state change is received from the wireless terminal 101. If the application execution section 102c determines that it is received, the process proceeds to step s53, and otherwise the process returns to the beginning of step s52.

In step s53, the application execution section 102c creates a home page posting the state change that is received from the wireless terminal 101. That is, the application execution section 102c creates a home page posting the monitoring result of the wireless terminal 101. Then, in step s54, the in-home radio base station 102 determines whether or not the termination of the state monitoring is instructed by the user.
If the in-home radio base station 102 determines that the termination of the state monitoring is instructed, a sequence of processes shown in FIG. 8 is completed, and otherwise the process returns to step s52. Through the above-described operations, the in-home radio base station 102 monitors the state change of the wireless terminal 101 until the termination of the state monitoring is instructed from the user and continues to update the posting on the home page each time the state change is received.

As described above, the in-home radio base station 102 according to this preferred embodiment automatically creates a home page posting the state change that is transmitted from the wireless terminal 101 within the home 100. Accordingly, even if the user is unfamiliar with a mobile phone and the Internet (PDN 109), the user can easily recognize the state change of the wireless terminal 101 at his/her desired timing.

The operations for creating the first to third home pages have been described above. Next, an operation for enabling these home pages to be displayed in the wireless terminal 101 will be described.

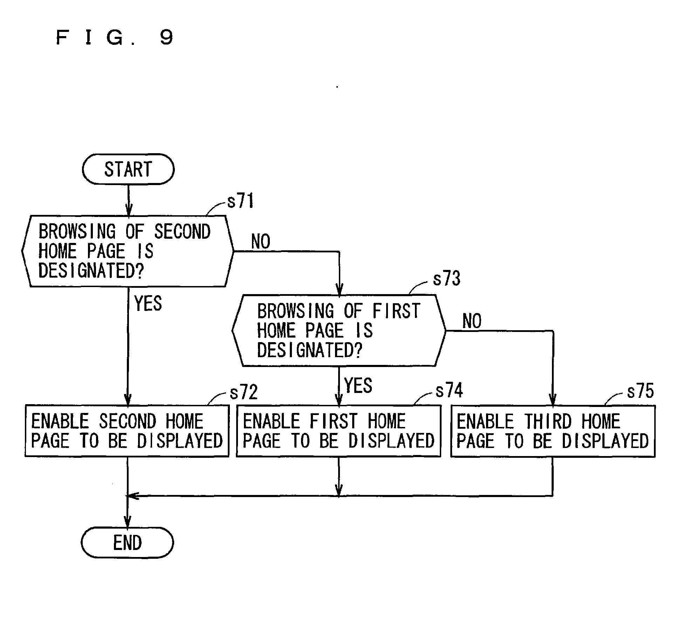

FIG. 9 is a flowchart showing an operation of the in-home radio base station 102 in enabling the created home page to be displayed. In the following, an operation of the in-home radio base station 102 at this time will be described.

The in-home radio base station 102, when powered on and starting to operate, in step s71, determines whether or not the user has designated, by using the wireless terminal 101, browsing of the second home page that is based on the input information about the medical, the government service, the disaster countermeasures, the transport/tourism, the leisure, the education/learning, and the food.
If the in-home radio base station 102 determines that the user has designated it, the process proceeds to step s72, and otherwise the process proceeds to step s73. In step s72, the in-home radio base station 102 enables the second home page to be displayed in the wireless terminal 101, and then a sequence of processes shown in FIG. 9 is completed.

In step s73, the in-home radio base station 102 determines whether or not the user has designated, by using the wireless terminal 101, browsing of the first home page that posts the URL relating to the previous browsing of the user. If the in-home radio base station 102 determines that the user has designated it, the process proceeds to step s74, and otherwise the process proceeds to step s75. In step s74, the in-home radio base station 102 enables the first home page to be displayed in the wireless terminal 101, and then the sequence of processes shown in FIG. 9 is completed.
On the other hand, in step s75, the in-home radio base station 102 enables the third home page posting the monitoring result to be displayed in the wireless terminal 101, and then the sequence of processes shown in FIG. 9 is completed. In this manner, the in-home radio base station 102 according to this preferred embodiment can browse the web page desired by the user.

In the in-home radio base station 102 according to this preferred embodiment described above, the relaying is performed by using the first and second protocol stacks, and the communication between the wireless terminal 101 and the PDN 109 is performed by using the third and fourth protocol stacks including the first and second protocol stacks and the upper layers thereof.
Accordingly, the in-home radio base station 102 can not only perform relaying but also transmit and receive data at the upper layer to and from each of the wireless terminal 101 and the PDN 109, thus automatically obtaining information useful for the user from the data. This allows any user to easily obtain information useful for himself/herself, and thus a ubiquitous network in a true sense can be formed.

The in-home radio base station 102 according to this preferred embodiment is, together with the public-use radio base station 11, accommodated in the business-use wired network 12, and is communicable with the public-use radio base station 11. Accordingly, even when the user is outside the home 100, the user can access the in-home radio base station 102 by using the wireless terminal 101 as long as the wireless terminal 101 (mobile phone) carried by the user is within a communicable range of the public-use radio base station 11. Therefore, even when the user is outside the home 100, the user can browse the home page specific to the user, which can improve user-friendliness.

In the description give above, in the communication system according to this preferred embodiment, for performing the LTE wireless communication standardized by3GPP, the S-GW 104 and the P-GW 105 are provided, and the first protocol stack includes the L1, the MAC layer, the RLC layer, and the PDCP layer, and the second protocol stack includes the L1, the L2, the UDP/IP layer, and the GTP-U layer.
However, a communication scheme is not limited to the LTE wireless communication, as long as the in-home radio base station 102 has a relay function and transmission and reception of the data at the application level can be made between the wireless terminal 101 and the PDN 109 (IP host 110) by using a protocol stack including the application layer.

### Preferred Embodiment 2

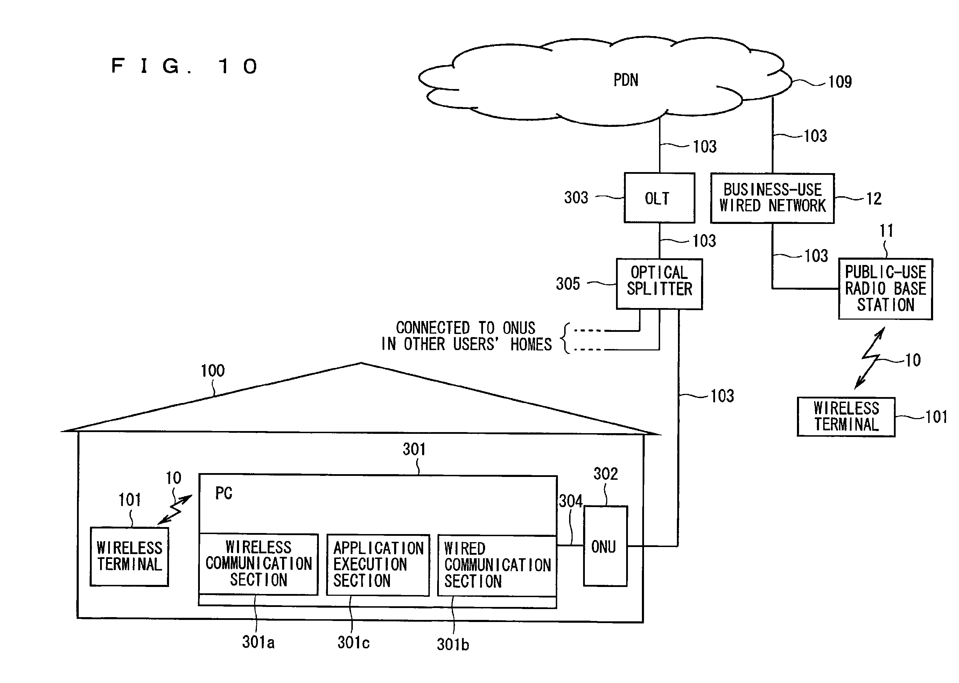

FIG. 10 is a diagram showing a configuration of a communication system according to a preferred Embodiment 2. In the preferred Embodiment 1, the home gateway includes the in-home radio base station 102, whereas in this preferred Embodiment 2, the home gateway includes a personal computer (hereinafter referred to as "PC") 301. In the following, a communication system including the PC 301 according to this preferred embodiment will be described with a focus on a point different from the preferred Embodiment 1.

The PC 301 has a relay function, and is communicably connected to the PDN 109 mainly via an ONU 302 (Optical Network Unit) that is an optical line termination device at the subscriber side, an optical splitter 305, and an OLT (Optical Line Terminal) 303 that is an optical line termination device provided in a central station at the communication service provider side.

More specifically, the ONU 302 is connected to the PC 301 via a LAN (Local Area Network) 304, and also connected to the optical splitter 305 via the broadband line 103 including an optical fiber. The ONU 302 converts an electrical signal used in the LAN 304 and an optical signal used in the broadband line 103 into each other. The optical splitter 305 is connected to a plurality of ONUs 302 via the broadband line 103, and also connected to the OLT 303 via a single-core optical fiber.
The optical splitter 305 splits an optical signal supplied from the optical fiber into a plurality of parts and outputs them to a plurality of ONUs 302, thereby enabling the optical fiber to be shared among the plurality of ONUs 302. The OLT 303 is connected to the optical splitter 305 via the optical fiber, and also connected to the PDN 109 via the broadband line 103. The OLT 303 transfers an optical signal between the ONU 302 and the PDN 109, and monitors and controls the ONU 302.

Similarly to the in-home radio base station 102 according to the preferred Embodiment 1, the PC 301 includes a wireless communication section 301 a for performing wireless communication with the wireless terminal 101, a wired communication section 301b for performing wired communication with the ONU 302 (predetermined node), and an application execution section 301c for implementing an application function.

In each of the wireless terminal 101 and the PC 301, for example, a communication apparatus using the LTE radio access scheme is attached or an LTE radio function is incorporated in advance, in order to enable the wireless communication 10 to be performed between the PC 301 and the wireless terminal 101 such as a home network apparatus terminal and a mobile phone within the home 100.
Thus, the PC 301 according to this preferred embodiment includes the above-mentioned wireless communication section 301a for performing wireless communication with the wireless terminal 101. Thereby, the wireless terminal 101 can be connected to a network including the PC 301, the ONU 302, the optical splitter 305, the OLT 303, and the PDN 109. Accordingly, the user can browse a web page on the PDN 109 by using the wireless terminal 101 that exists within the home 100.

The PDN 109 is connected to the public-use radio base station 11 via the business-use wired network 12 described in the preferred Embodiment 1. Thereby, the PC 301 is communicable with the public-use radio base station 11. Therefore, even when the user is outside the home 100, the user can access the PC 301 by using the wireless terminal 101 (mobile phone) via the public-use radio base station 11, the business-use wired network 12, ..., the optical splitter 305, and the ONU 302, as long as the wireless terminal 101 carried by the user is within a communicable range of the public-use radio base station 11.

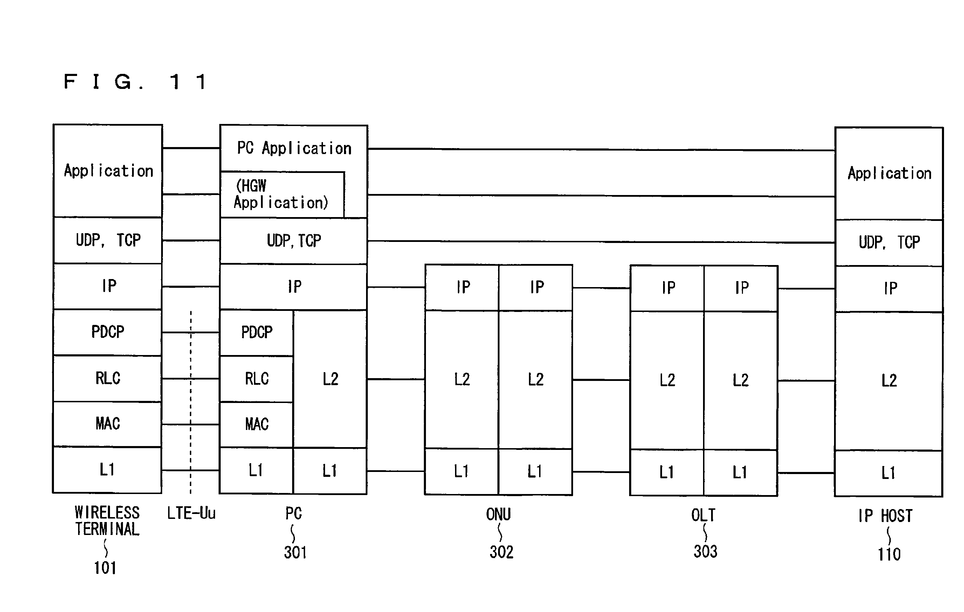

FIG. 11 is a diagram showing a protocol stack used in the communication system according to this preferred embodiment. In this drawing, the optical splitter 305 is omitted. Protocol stacks of the wireless terminal 101 and the PDN 109 (IP host 110) are the same as those in the preferred Embodiment 1, and therefore descriptions thereof are omitted.

As shown in FIG. 11, in the wireless side (wireless terminal 101 side) in the PC 301, a protocol stack includes an L1, a MAC layer, an RLC layer, a PDCP layer, and an IP layer. Hereinafter, the L1, the MAC layer, the RLC layer, the PDCP layer, and the IP layer, which serve for wireless transmission in the PC 301, will be sometimes referred to as "first protocol stack".

In the wired side (ONU 302 side) in the PC 301, a protocol stack includes an L1, an L2, and an IP layer. Hereinafter, the L1, the L2, and the IP layer, which serve for IP transmission in the PC 301, will be sometimes referred to as "second protocol stack".

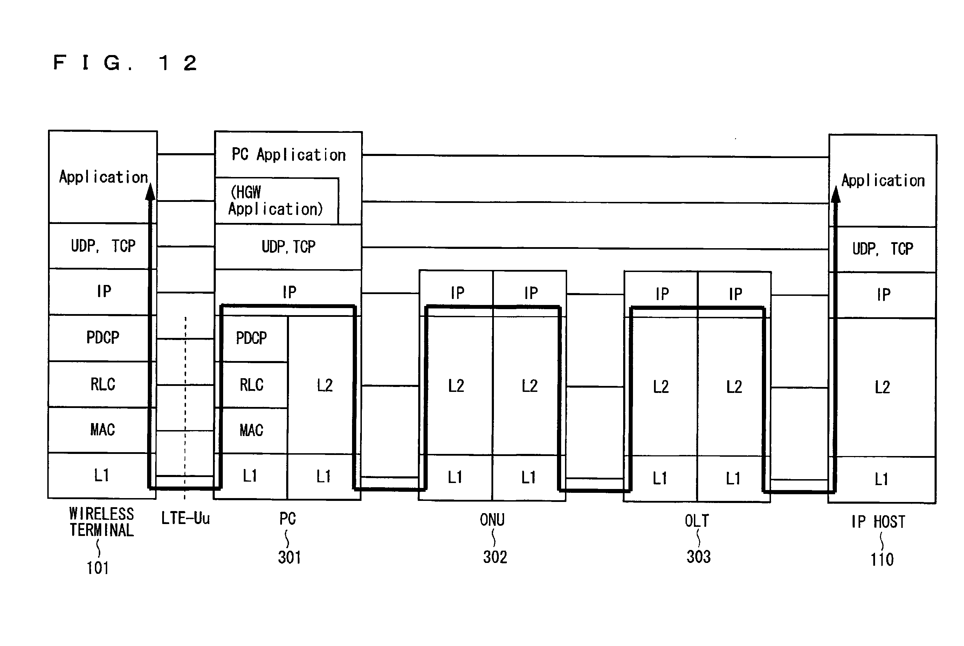

In a case where the PC 301 performs relaying to transfer data bidirectionally between the wireless terminal 101 and the PDN 109 (IP host 110), the PC 301 uses the first and second protocol stacks. A detailed description of this operation will be given later with reference to FIG. 12.

On each of the first and second protocol stacks, a UDP or TCP layer and a PC application layer that is an application layer operated on the PC (upper layers) are provided. Hereinafter, a protocol stack including the first protocol stack, the UDP or TCP layer, and the PC application layer will be sometimes referred to as "third protocol stack". Also, a protocol stack including the second protocol stack, the UDP or TCP layer, and the PC application layer will be sometimes referred to as "fourth protocol stack".

In a case where the PC 301 transmits and receives, to and from the wireless terminal 101, data used in the PC 301 and the wireless terminal 101, the PC 301 uses the third protocol stack. In a case where the PC 301 transmits and receives, to and from the PDN 109 (IP host 110), data used in the PC 301 and the PDN 109 (IP host 110), the PC 301 uses the fourth protocol stack.

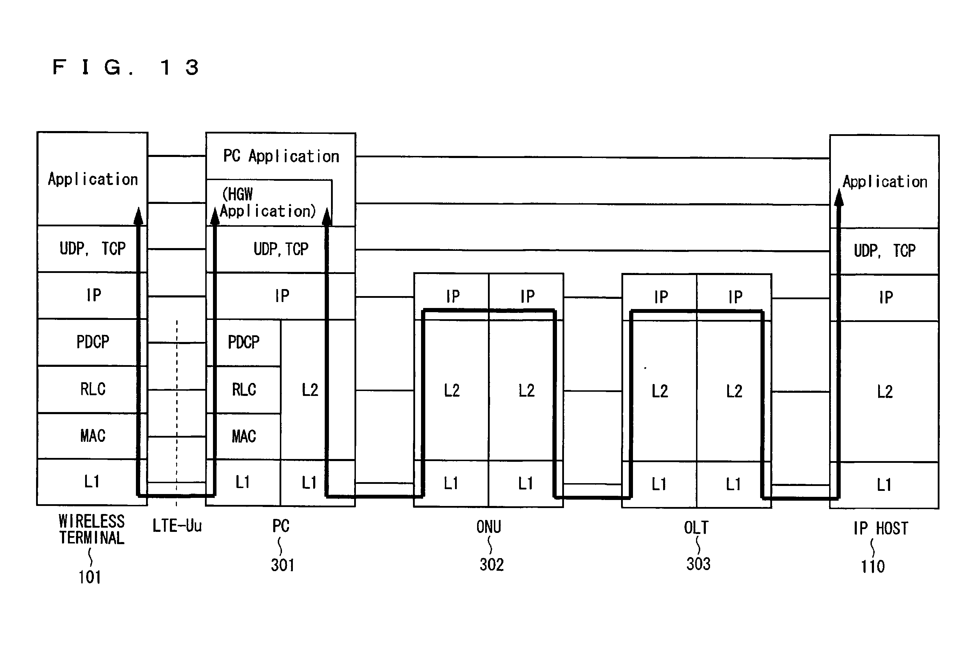

The PC application layer includes a home gateway application layer (hereinafter referred to as "HGW application layer") that is identical to the application layer described in the preferred Embodiment 1 and that corresponds to a program installed in the PC 301.
Similarly to the preferred Embodiment 1, the application execution section 301c according to this preferred embodiment creates the first to third home pages that post information useful for the user, based on data at an HGW application level supplied from the wireless terminal 101 and the PDN 109 (IP host 110). These operations will be described later with reference to FIG. 13.

In both the PC 301 side and the OLT 303 side in the ONU 302, a protocol stack includes an L1, an L2, and an IP layer, which serve for IP transmission. In both the ONU 302 side and the PDN 109 (IP host 110) side in the OLT 303, a protocol stack includes an L1, an L2, and an IP layer, which serve for IP transmission.

FIG. 12 is a diagram showing a data transfer path in the communication system in a case where the PC 301 performs relaying to transfer data bidirectionally between the wireless terminal 101 and the PDN 109 (IP host 110). Referring to this drawing, firstly, a description will be given to an operation of the communication system when transmission data (for example, HTML file data) at an application level of the wireless terminal 101 is transferred from the wireless terminal 101 to the IP host 110.

The wireless terminal 101 performs wireless communication with the wireless communication section 301a of the PC 301 via LTE-Uu, and transmits the transmission data to the wireless communication section 301 a. In this communication, the wireless communication section 301a uses the first protocol stack including the L1 to IP layer.

The wired communication section 301b of the PC 301 performs wired communication with the ONU 302, and transmits the transmission data to the ONU 302. In this communication, the wired communication section 301b uses the second protocol stack including the L1 to IP layer.

In this manner, the wireless communication section 301 a and the wired communication section 301b use the first and second protocol stacks, respectively, and consequently the transmission data of the wireless terminal 101 passes through the IP layer of the PC 301.

The transmission data transmitted from the PC 301 to the ONU 302 passes through the IP layer of the ONU 302, and then is transmitted from the ONU 302 to the OLT 303. The transmission data transmitted from the ONU 302 to the OLT 303 passes through the IP layer of the OLT 303, and then is transmitted from the OLT 303 to the IP host 110. The IP host 110 uses, as data at an application level, the transmission data of the wireless terminal 101 transmitted from the OLT 303.

In the above-described manner, the data at the application level of the wireless terminal 101 is transferred from the wireless terminal 101 to the IP host 110. On the other hand, in a case where data at the application level of the IP host 110 is transferred from the IP host 110 to the wireless terminal 101, an operation reverse to the above-described operation is performed. In this manner, the PC 301 performs relaying to transfer data bidirectionally between the wireless terminal 101 and the PDN 109 (IP host 110) by using the first and second protocol stacks.

The PC 301 according to this preferred embodiment is also able to implement the application function by using the program in the HGW application layer. Next, this will be described.

FIG. 13 is a diagram showing a data transfer path in a case where data in the HGW application layer is transmitted and received between the PC 301 and the wireless terminal 101 and between the PC 301 and the PDN 109 (IP host 110). Only the PC 301 operates differently from in the operation shown in FIG. 12. Therefore, only this point will be described.

The wireless communication section 301a of the PC 301 performs wireless communication with the wireless terminal 101 via the LTE-Uu by using the third protocol stack. Thereby, the PC 301 can use the data at the application level supplied from the wireless terminal 101 as the data at the HGW application level of the PC 301. Likewise, the wireless terminal 101 can use the data at the HGW application level supplied from the PC 301 as the data at the application level of the wireless terminal 101.

On the other hand, the wired communication section 301b of the PC 301 performs wired communication with the ONU 302 by using the fourth protocol stack. Thereby, the PC 301 can use the data at the application level supplied from the PDN 109 (IP host 110) and transmitted from the ONU 302 as the data at the HGW application level of the PC 301. Likewise, the PDN 109 (IP host 110) can use the data at the HGW application level supplied from the PC 301 and transmitted from the OLT 303 as the data at the application level of the PDN 109 (IP host 110).

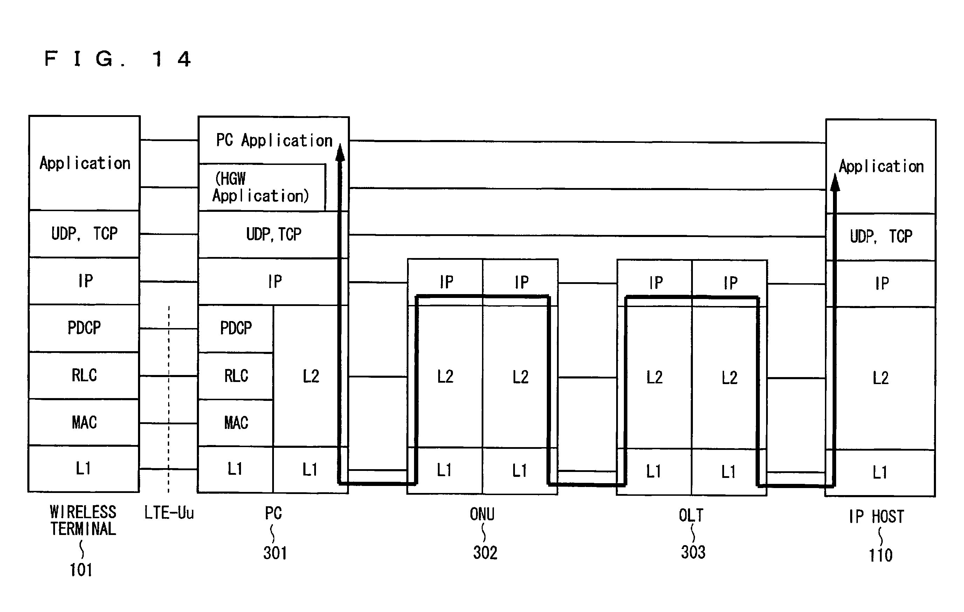

Here, the application execution section 301c of the PC 301 according to this preferred embodiment implements the application function by using the program in the HGW application layer, and thereby can automatically obtain information useful for the user from the data at the application level supplied from the wireless terminal 101 and the PDN 109 (IP host 110). To be specific, the application execution section 301c can create the first to third home pages by performing the operations shown in FIG. 6 to FIG. 9.
The PC 301 displays, from the first to third home pages, a home page designated by the user. Accordingly, similarly to the preferred Embodiment 1, the PC 301 according to this preferred embodiment enables any user to easily obtain information useful for himself/herself. For the purpose of comparison, FIG. 14 shows an operation of the communication system in a case where the user familiar with a mobile phone and a personal computer browses a web page on the PC 301.

The public-use radio base station 11 according to this preferred embodiment performs an operation similar to the relaying shown in FIG. 5. Therefore, even when the user is outside the home 100, the user can browse the home page specific to the user, which can improve user-friendliness.

While the invention has been described in detail, the foregoing description is in all aspects illustrative and not restrictive. It is therefore understood that numerous modifications and variations not illustrated herein can be devised without departing from the scope of the invention.

### DESCRIPTION OF THE REFERENCE NUMERALS

| | |
|---|---|
| 11 | public-use radio base station |
| 101 | wireless terminal |
| 102 | in-home radio base station |
| 102a | wireless communication section |
| 102b | wired communication section |
| 102c | application execution section |
| 104 | S-GW |
| 105 | P-GW |
| 109 | PDN |
| 301 | PC |
| 301a | wireless communication section |
| 301b | wired communication section |
| 301c | application execution section |
| 302 | ONU |
| 303 | OLT |
| 305 | optical splitter |

## Claims

1. A home gateway including an in-home radio base station, comprising:
- a first communication section for communicating with a wireless terminal; and
- a second communication section for communicating with a PDN (Packet Data Network) via a predetermined node,
wherein
- in a case where the home gateway performs relaying to transfer data bidirectionally between the wireless terminal and the PDN, the first communication section communicates with the wireless terminal by using a first protocol stack while the second communication section communicates with the predetermined node by using a second protocol stack,
- in a case where the home gateway transmits and receives data to and from the wireless terminal, the first communication section communicates with the wireless terminal by using a third protocol stack that includes the first protocol stack and an upper layer above a layer of the first protocol stack,
- in a case where the home gateway transmits and receives data to and from the PDN via the predetermined node, the second communication section communicates with the predetermined node by using a fourth protocol stack that includes the second protocol stack and an upper layer above a layer of the second protocol stack,
- the home gateway further comprises an application execution section for implementing a predetermined application function by using a program in the upper layer.

2. The home gateway according to claim 1,
wherein
- the predetermined node includes an S-GW (Serving Gateway) that is connected to the PDN and a P-GW (Packet Data Network Gateway) in this order,
- the first protocol stack includes an L1 (Layer1), a MAC (Media Access Control) layer, an RLC (Radio Link Control) layer, and a PDCP (Packet Data Convergence Protocol) layer,
- the second protocol stack includes an L1, an L2 (Layer2), a UDP (User Dataprogram Protocol) / IP (Internet Protocol) layer, and a GTP-U (GPRS Tunneling Protocol for User Plane) layer,
- each of the third and fourth protocol stacks includes an IP layer, a UDP layer, a TCP (Transmission Control Protocol) layer, and an application layer that is the upper layer.

3. The home gateway according to claim 1,
wherein
- the home gateway includes a personal computer instead of the in-home radio base station,
- the predetermined node includes an ONU (Optical Network Unit) that is connected to the PDN, an OLT (Optical Line Terminal), and an optical splitter in this order,
- the first protocol stack includes an L1 (Layer1), a MAC (Media Access Control) layer, an RLC (Radio Link Control) layer, a PDCP (Packet Data Convergence Protocol) layer, and an IP (Internet Protocol) layer,
- the second protocol stack includes an L1, an L2 (Layer2), and an IP layer,
- each of the third and fourth protocol stacks includes a UDP (User Dataprogram Protocol) layer, a TCP (Transmission Control Protocol) layer, and an application layer that is the upper layer.

4. The home gateway according to claim 1,
wherein based on input information input from the outside, the application execution section searches the PDN for an URL (Uniform Resource Locator) of a desired web page and creates a web page that posts the URL.

5. The home gateway according to claim 4,
wherein
- the input information includes information about the sex, the age, a family structure, an address, whether or not a user owns a car, a hobby, and a favorite food, of the user,
- based on the information about the address, the application execution section searches for a URL of a web page that posts each of desired medical information, desired government services information, and desired disaster countermeasures information, as the URL of the desired web page,
- based on the information about the sex, the age, the family structure, the address, the whether or not the user owns a car, the hobby, and the favorite food, the application execution section searches for a URL of a web page that posts desired transport/tourism information, as the URL of the desired web page,
- based on the information about the family structure and the address, the application execution section searches for a URL of a web page that posts desired education/learning information, as the URL of the desired web page,
- based on the information about the address and the favorite food, the application execution section searches for a URL of a web page that posts desired food information, as the URL of the desired web page.

6. The home gateway according to claim 1,
wherein in a case where data transferred in relaying includes U-Plane data and the U-Plane data includes a URL of a web page, the application execution section extracts a desired character string from character strings posted on the web page, and searches the PDN for a URL of a web page that posts the desired character string based on the desired character string, and creates a web page that posts the URL.

7. The home gateway according to claim 1,
wherein
- the wireless terminal includes a mobile phone and a home network apparatus terminal,
- the application execution section creates a web page that posts a state change transmitted from the wireless terminal in a home.

8. The home gateway according to claim 7,
wherein upon designation by a user, the home gateway enables any of a URL obtained by searching based on a predetermined information, a URL obtained by searching based on a desired character string, and a monitoring result to be displayed.

9. The home gateway according to claim 1,
wherein the home gateway is communicable with a public-use radio base station.
